# EUROPÄISCHE PATENTSCHRIFT

(11) **EP 1 529 937 B1**
(45) Veröffentlichungstag und Bekanntmachung des Hinweises auf die Patenterteilung: **18.01.2012**
(21) Anmeldenummer: 04024451.9
(22) Anmeldetag: 14.10.2004
(51) Int. Cl.: F01P 7/16, F16K 11/087

(54) **Kühlsystem für Verbrennungskraft in Maschinen, insbesondere für Automobile**
Cooling system for internal combustion engines, especially for motor vehicles
Système de refroidissement pour des moteurs à combustion interne, notamment pour véhicules automobiles

(30) Priorität: 06.11.2003 DE 10351852
(43) Veröffentlichungstag der Anmeldung: 11.05.2005
(73) Patentinhaber: ITW Automotive Products GmbH & Co. KG, 58642 Iserlohn (DE)
(72) Erfinder: Heldberg, Carsten, Dipl.-Ing., 27308 Kirchlinteln (DE)
(74) Vertreter: Hauck Patent- und Rechtsanwälte

(56) Entgegenhaltungen:
- EP-A- 0 639 736
- EP-A- 1 108 867
- WO-A-03/100950
- DE-A- 10 128 385
- DE-U- 8 702 534
- GB-A- 729 893
- US-B1- 6 539 899

## Beschreibung

Die Erfindung bezieht sich auf ein Kühlsystem für Verbrennungskraftmaschinen, insbesondere für Automobile nach dem Oberbegriff des Patentanspruchs 1.

In einem herkömmlichen Kühlsystem fördert eine Pumpe das Kühlmittel, in der Regel ein Wasser-Glykol-Gemisch, über den Motorblock und den Zylinderkopf der Verbrennungskraftmaschine und im Anschluß über einen Öl-Wasser-Wärmetauscher und parallel über einen Kühler. Im Winterbetrieb wird außerdem vom Motorblock kommendes Kühlwasser über eine Heizung geleitet. Zur Aufteilung der einzelnen Ströme wird im Stand der Technik eine Mehrzahl von Ventilen verwendet, die von einer geeigneten Betätigungsvorrichtung betätigt und angesteuert werden.

EP 1 108 807 A2 offenbart ein Dreiwegeventil mit einem Anschluss für den von einer Brennkraftmaschine kommenden Teil der Zulaufleitung, einen Anschluss für den zu einem Kühler führenden Teil der Zulaufleitung und einen Anschluss für eine Bypassleitung, wobei die Anschlüsse in einer Ebene senkrecht zur Drehachse des Drosselkörpers des Ventils angeordnet sind.

Aus EP 0 639 736 A1 ist ein Regelventil mit einer zylinderförmigen Ventilkammer und einem Zulauf sowie drei Abläufen bekannt, wobei in der Ventilkammer ein zylindersegmentförmiger Ventilkörper drehbar angeordnet ist, der die in einer Ebene liegenden Zu- bzw. Abläufe bedarfsweise zumindest teilweise verschließt (vgl. Fig. 2). Ein ähnliches Regelventil ist aus US 6,539,899 B1 bekannt. Der Erfindung liegt die Aufgabe zugrunde, ein Kühlsystem für Verbrennungskraftmaschinen zu schaffen, bei dem die verschiedenen Kühl-Betriebsarten mit einfachen Mitteln verwirklicht werden.

Diese Aufgabe wird durch die Merkmale des Patentanspruchs 1 gelöst.

Beim erfindungsgemäßen Kühlsystem weist die Ventilanordnung ein einziges Mehrwegeventil auf mit einem Zulauf und drei mit dem Kühler und einem Bypass verbundenen Abgängen auf. Ein von der Betätigungsvorrichtung verstellbares Ventilglied wirkt mit den Abgängen so zusammen, daß es in einer ersten Stellung einen Durchfluß sperrt, in einer zweiten Stellung einen Durchfluß zum Bypass, in einer dritten Stellung Teildurchflüsse zum Bypass und zum Kühler, in einer vierten Stellung den Durchfluß allein zum Kühler freigibt, und in einer fünften Stellung den Teildurchgang zum Kühler (18) und zum dritten Abgang (C) freigibt.

Es ist vorgesehen, dass das Mehrwegeventil einen dritten mit einer Heizung verbundenen Abgang aufweist und das Ventilglied in einer fünften Stellung den Teildurchgang zum Kühler und zum dritten Abgang freigibt.

Bei dem erfindungsgemäßen Kühlsystem können die Kühlmittelströme bedarfsgerecht auf einfache Weise eingestellt werden. Beim Motorkaltstart werden zweckmäßigerweise alle Wege abgeschlossen, damit nur ein geringer Kühlmittelstrom durch den Zylinderkopf und den ÖI-Wasser-Wärmetauscher zur Wasserpumpe zurückfließen kann, wodurch eine schnelle Aufheizung der Verbrennungskraftmaschine erfolgt. Im Sommerbetrieb kann bei weiterer Erwärmung der Maschine ein Bypass-Weg geöffnet werden, um eine Durchströmung des Motorblocks zu gewährleisten. Erwärmt sich der Motor noch weiter, so ist eine Teildurchströmung durch den Kühler und gleichzeitig eine Durchströmung durch den Bypass-Weg notwendig. Erst bei sehr heißem Motor wird eine vollständige Öffnung des Kühlerweges und Verschließen des Bypass-Weges erforderlich.

In der Betriebsart "Winterbetrieb" muß außerdem ein Weg über die Heizung geöffnet werden.

Es sind verschiedene Möglichkeiten denkbar, ein Mehrwegeventil mit den beschriebenen Eigenschaften zu verwirklichen. Das Mehrwegeventil ist ein Kugelventil, dessen Zulauf axial in das Innere einer hohlen Ventilkugel gebildet ist, die drehbar in einem Ventilgehäuse gelagert ist, die Ventilkugel in Umfangsrichtung einen länglichen Durchgang aufweist und die radialen Abgänge im Ventilgehäuse annähernd in Höhe des Äquators der Ventilkugel liegen. Es versteht sich, daß der längliche Durchgang in der Ventilkugel und die Lage der Abgänge im Ventilgehäuse so ausgebildet sind, daß die weiter oben beschriebenen Betriebsarten realisiert werden können.

Für die Lagerung und Abdichtung der Ventilkugel im Ventilgehäuse sind mit einer Ausnahme besondere Dichtungsanordnungen nicht erforderlich, da z.B. bei einer Verbindung mit der Kühlmittelpumpe über den Bypass oder die Heizung ein Leck nicht unterbunden werden muß. Allerdings ist vorteilhaft, wenn der den Kühler mit dem Ventilgehäuse verbindende Abgang einen Dichtring aufweist, der aus gleitfähigem verschleißfestem Material besteht und der über ein Federelement abgestützt ist, damit er in stetiger Anlage an der Ventilkugel gehalten wird. Ein derartiger Dichtring kann z.B. aus PTFE hergestellt werden. Das Federelement kann nach einer weiteren Ausgestaltung der Erfindung aus einem elastomeren Material gebildet sind, welches in einer Nut aufgenommen ist und den Durchgang von Kühlmittel über die Nut sperrt. Das Dichtelement verwirklicht somit zwei Funktionen, nämlich einmal eine Federfunktion und zum anderen eine Dichtfunktion in der Nut.

Um eine besonders einfache Montage zu ermöglichen, sieht eine Ausgestaltung der Erfindung vor, daß zwischen der Innenwandung des Ventilgehäuses und der Ventilkugel zwei oder drei Segmente angeordnet sind, die an der Innenseite nahe an der Oberfläche der Ventilkugel liegen und deren Verlauf folgen und außen an der Innenwand des Ventilgehäuses anliegen. Ferner sind Mittel im Ventilgehäuse vorgesehen, um die Segmente im Ventilgehäuse festzulegen. Vor der Montage werden die Segmente um die Ventilkugel herum angeordnet, wonach anschließend die so gebildete Einheit in das im wesentlich topfförmige Ventilgehäuse eingeschoben wird. Die offene Seite des topfförmigen Ventilgehäuses kann von einem Deckel verschlossen werden, wobei Boden und Deckel des Gehäuses Lager aufweisen für eine Welle, auf der die Ventilkugel drehfest angeordnet ist. Über die Welle, die von einem geeigneten Drehantrieb angetrieben werden kann, kann die Ventilkugel in die einzelnen Betriebsstellungen verdreht werden.

Damit einerseits die Ventilkugel wirksam gelagert und andererseits ein axialer Zufluß des Kühlmittels erzielt werden kann, sieht eine Ausgestaltung der Erfindung vor, daß die Ventilkugel in Richtung ihrer Drehachse an beiden Enden einen ringförmigen axialen Ansatz aufweist. In jedem ringförmigen Ansatz ist innen ein Lagerring mittels radialer Rippen abgestützt. Die Lagerringe sind so ausgebildet, daß sie die Welle drehfest aufnehmen.

Für die Betätigung der Ventilkugel des erfindungsgemäßen Ventils ist ein Antrieb erforderlich, der z.B. von einem Gleichstrommotor gebildet sein kann, der über ein Getriebe mit der Welle gekoppelt ist. Alternativ kann ein Schrittmotor vorgesehen werden. Ferner ist vorzugsweise ein Winkelsensor zur Positionserfassung der Ventilkugel vorgesehen, der z.B. durch einen Hall-Effekt-Sensor, einen Näherungssensor mit Permanentmagnet oder dergleichen, verwirklicht sein kann.

Um eine definierte Grundstellung zu erhalten, kann nach einer weiteren Ausgestaltung der Erfindung eine Rückstellfeder an dem Ventilglied bzw. der Ventilkugel angreifen und in eine Grundstellung vorspannen, wobei die Grundstellung durch einen Anschlag begrenzt wird.

Alternativ ist auch möglich, zu Verstellzwecken ein sogenanntes Dehnstoffelement vorzusehen, das in axialer Richtung innerhalb der Ventilkugel angeordnet ist. Über eine geeignete Kulissenführung oder dergleichen kann die lineare Bewegung des Dehnstoffelements in eine Drehbewegung der Ventilkugel mit z.B. einem Drehwinkel von 0 bis 90° bzw. 0 bis 120° um gesetzt werden. Diese Variante bietet sich insbesondere an, wenn im Ventilgehäuse nicht drei, sondern nur zwei Abgänge vorgesehen sind.

Die Erfindung wird nachfolgend anhand von Ausführungsbeispielen näher erläutert.
- Fig. 1: zeigt ein Schaltungsschema eines Kühlsystem nach der Erfindung.
- Fig. 2: zeigt schematisch ein Kugelventil für das erfindungsgemäße Kühlsystem in fünf verschiedenen Schaltstellungen.
- Fig. 3: zeigt eine Explosionsdarstellung eines Kugelventils nach der Erfindung.
- Fig. 4: zeigt perspektivisch das Gehäuse des Kugelventils nach Fig. 3.
- Fig. 5: zeigt perspektivisch die Ventilkugel des Kugelventils nach Fig. 3.
- Fig. 6: zeigt eine Seitenansicht der Ventilkugel nach Fig. 5.
- Fig. 7: zeigt einen Schnitt durch die Darstellung nach Fig. 6 entlang der Linie 7-7.
- Fig. 8: zeigt einen Schnitt durch die Darstellung nach Fig. 7 entlang der Linie 8-8.
- Fig. 9: zeigt einen Schnitt durch das erfindungsgemäße Kugelventil in montierter Lage.
- Fig. 10: zeigt die Einzelheit 10 in der Darstellung nach Fig. 9.

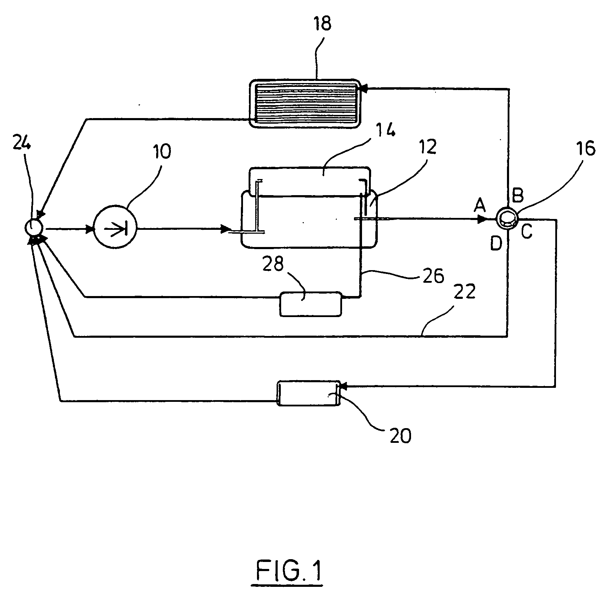

In Fig. 1 ist eine Wasserpumpe 10 zu erkennen, die in bekannter Weise einen Motorblock 12 bzw. einen Zylinderkopf 14 mit Kühlwasser versorgt bzw. deren Kühlkanäle. Das erwärmte Wasser gelangt zu einem Mehrwegeventil 16, das drei Abgänge B, C und D aufweist. Der Abgang B führt zu einem Kühler 18, der Abgang C zu einer Heizung 20 und der Abgang D zu einem Bypass 22. Vor der Kühlwasserpumpe 10 vereinigen sich die gezeigten Leitungen im Sammelpunkt 24. Außerdem ist eine Leitung 26 vorgesehen, die über einen Öl-Wasser-Wärmetauscher 28 geführt ist.

Es sei noch erwähnt, daß es sich bei dem Motor 12 um eine Verbrennungskraftmaschine handelt, z.B. für ein Automobil.

Das gezeigte Kühlsystem arbeitet wie folgt: Das Mehrwegeventil 16 weist eine Sperrstellung auf, in der alle Wege abgeschlossen sind. Bei einem Motorkaltstart fließt daher nur ein geringer Wasserstrom durch den Zylinderkopf über den Öl-Wasser-Wärmetauscher 28 zur Wasserpumpe zurück. Bei der Betriebsart "Sommerbetrieb" wird bei einer weiteren Erwärmung des Motors der Bypass-Weg AD geöffnet, um eine Durchströmung des Motorblocks zu gewährleisten. Erwärmt sich der Motor noch weiter, so ist eine Teildurchströmung des Kühlers 18 und gleichzeitig eine Durchströmung des Bypass-Weges AD notwendig. Erst bei sehr heißem Motor wird eine vollständige Öffnung des Kühlerweges AB und ein Schließen des Bypass-Weges AD notwendig. In der Betriebsart "Winterbetrieb" wird auch der Heizungsweg AC geöffnet, parallel zum Kühlerbetrieb AB.

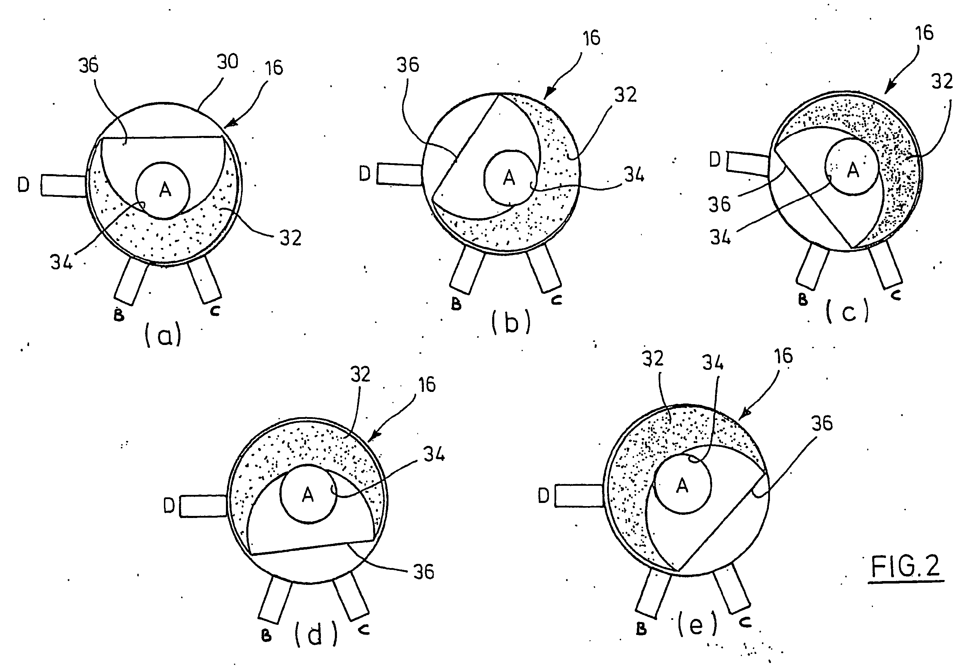

Das Mehrwegeventil 16 ist ein Kugelventil, das schematisch in Fig. 2a bis e dargestellt ist. Es weist ein Ventilgehäuse 30 auf mit drei am Umfang angeordneten Abgängen BCD entsprechend Fig. 1. Im Ventilgehäuse ist eine hohle Ventilkugel 32 gelagert, die einen axialen Durchgang 34 aufweist, der mit dem Zufluß A verbunden ist. Der Durchgang 34 bzw. das Innere der Ventilkugel 32 steht in Verbindung mit einem länglichen sich in Umfangsrichtung erstreckenden Durchbruch 36 in der Kugel. Man erkannt in Fig. 2a, daß das Kugelventil 16 in seiner Sperrstellung ist. Bei einer Verdrehung der Kugel 32 um ihre Achse (die Lagerung der Kugel ist hier im einzelnen nicht dargestellt), wird eine Verbindung zwischen Zulauf A und Abgang D hergestellt. Bei einer weiteren Drehung entgegengesetzt dem Uhrzeigersinn sind die Abgänge D und B mit dem Zulauf A verbunden. Man erkennt, daß der Umfangsabstand der Abgänge und die Länge des Durchbruchs 36 so bemessen sind, daß die Abgänge B und D beide mit Kühlmedium versorgt werden können. In der Stellung gemäß Fig. 2d ist der Abgang D verschlossen, und die Abgänge C und B sind mit Zulauf A verbunden. In Fig. 2e sind die Abhänge B und D gesperrt und der Abgang C ist mit dem Zulauf A verbunden. Diese Stellung ist zugleich die Grundstellung, in welche die Ventilkugel (50) durch eine nicht gezeigte Feder und gegen einen nicht gezeigten Anschlag vorgespannt ist. Diese Grundstellung (failsafe-Stellung) sichert, daß der Kühlkreis geöffnet ist und die Maschine nicht überhitzt wird. Die oben beschriebenen Betriebsarten können daher mit dem Kugelventil 16 verwirklicht werden.

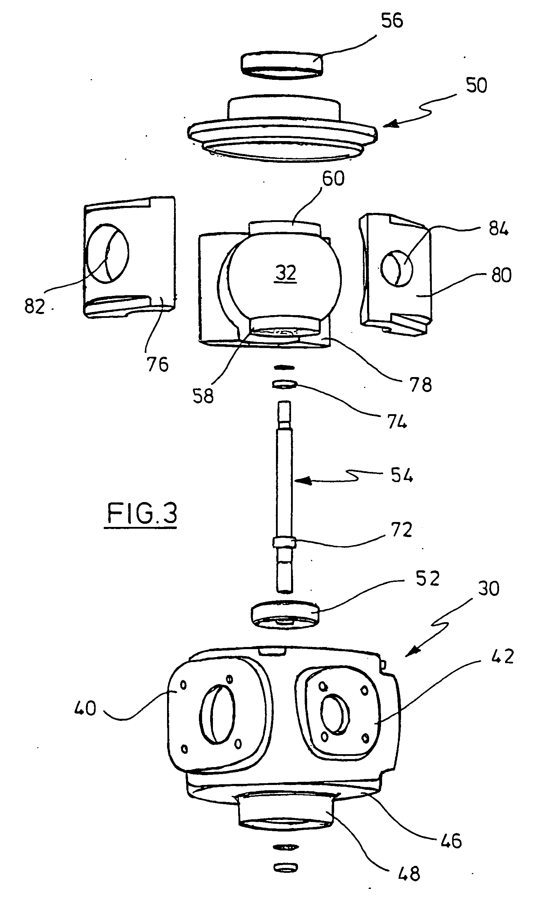

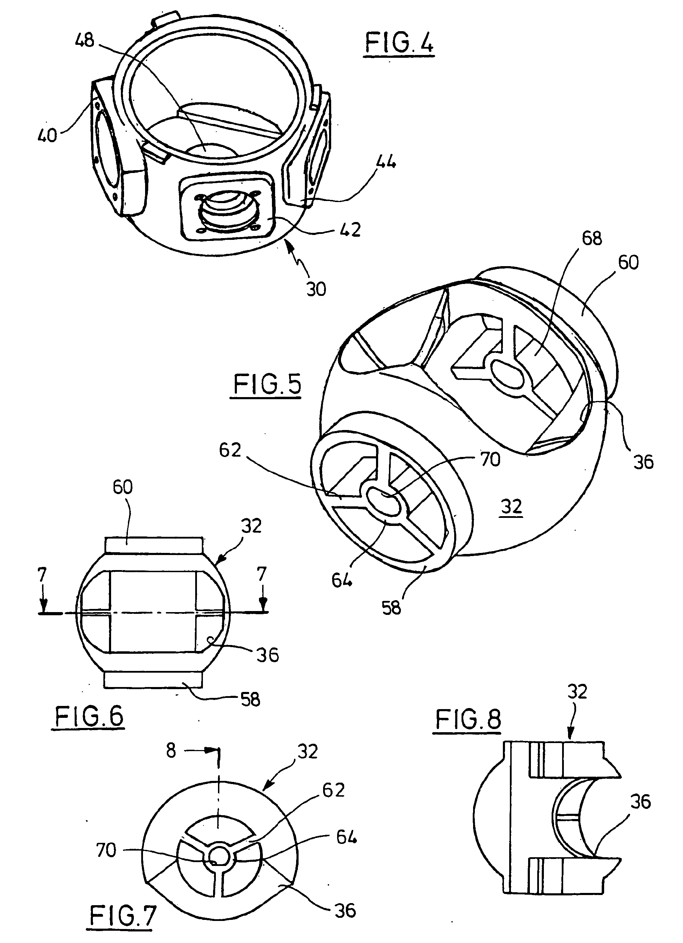

In den Figuren 3 bis 10 ist der konstruktive Aufbau des Kugelventils 16 ausführlicher dargestellt. Ventilgehäuse 30 und Ventilkugel 32 sollen mit gleichen Bezugszeichen wie in Fig. 2 versehen werden. Wie aus den Fign. 3 und 4 zu erkennen, ist das Ventilgehäuse 30 topfförmig, wobei am Umfang bzw. an der Wandung drei in Umfangsrichtung beabstandet Flansche 40, 42, 44 gebildet sind mit zugehörigen Öffnungen, die die Abgänge B, C und D gemäß Fig. 2 bilden. Im Boden 46 des topfförmigen Gehäuses 30 ist mittig ein zylindrischer axialer Ansatz 48 geformt. In Fig. 3 ist zu erkennen, daß das Gehäuse 30 an der offenen Seite durch einen Deckel 50 verschlossen werden kann, wobei der Verschluß des Gehäuses mit dem Deckel 50 ein Bajonettverschluß sein kann. Es kann jedoch auch vorgesehen werden, den Deckel 50 mit Hilfe einiger achsparalleler Schrauben mit dem Gehäuse 30 zu verbinden.

Im Ansatz 48 wird ein Lagerring 52 für eine Welle 54 aufgenommen, welche Welle sich durch die Ventilkugel in Deckel 50 hinein erstreckt, und ein zweiter Lagerring 56 ist in einer Öffnung des Deckels 50 aufgenommen. Die Welle 54 erstreckt sich dabei über eine Öffnung im Ansatz 48 nach außen zwecks Verbindung mit einem geeigneten nicht gezeigten Drehantrieb.

Der Aufbau der Ventilkugel 32 geht deutlicher aus den Fign. 5 bis 8 hervor.

Man erkennt, daß die Ventilkugel 32 hohl ist und der Durchbruch 36 sich über mehr als 90° erstreckt. Diametral sind an dem Kugelkörper axial vorspringende ringförmige Bunde 58, 60 angeformt, die innen mit drei in 120°-Abstand angeformten Rippen 62 verbunden sind, die jeweils einen Lagerring 64 bzw. 68 abstützen. Die Mittenachse der Lagerringe 64, 68 liegen auf einer Linie und entsprechen der Achse der Welle 54 gemäß Fig. 3. Der Durchgang 36 liegt dementsprechend auf einem Kreis um diese Achse annähernd symmetrisch zum Äquator. Auf diesem Äquator liegen auch die Öffnungen der Abgänge 40 bis 44 des Gehäuses 30.

Wie erkennbar, weisen die Lagerringe 64, 68 innen eine Abflachung 70 auf, die mit einer entsprechenden Abflachung (nicht gezeigt) der Welle 54 zusammenwirken. Dadurch ist die Ventilkugel 32 drehfest auf der Welle 54 angeordnet.

Die axiale Lage der Ventilkugel 32 auf der Welle 54 wird durch einen Bund 72 der Welle 54 auf einer Seite und durch einen weiteren Ring 74, der auf die Welle 54 aufgeschoben und dort festgelegt wird, gesichert.

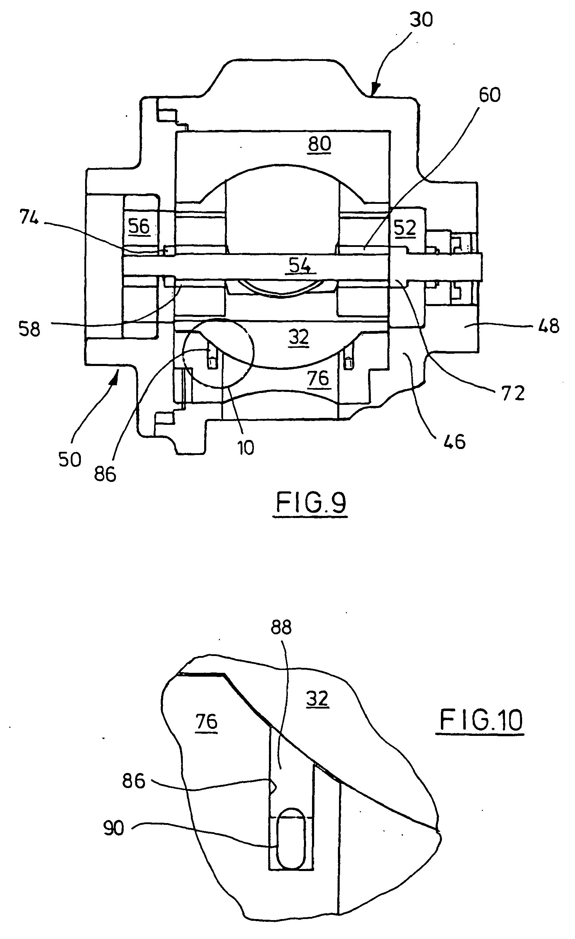

In Fig. 3 ist ferner zu erkennen, daß um die Ventilkugel 32 herum drei Segmente 76, 78, 80 angeordnet sind. Ihre Länge entspricht der Länge der kompletten Ventilkugel einschließlich der ringförmigen Bunde 58, 60. Sie weisen jeweils eine radiale Öffnung auf, von denen eine bei 82 und die andere bei 84 gezeigt ist. Diese radialen Öffnungen sind mit den Öffnungen in dem Ventilgehäuse 30 ausgerichtet. Die Segmente 76 bis 80 sind auf der Innenseite an die Kontur der Ventilkugel 32 angepaßt und außen an die Kontur der Innenwandung des Gehäuses 30. Die Segmente 76 bis 80 wirken in geeigneter Weise im Gehäuse 30 mit einer entsprechenden Ausbildung des Bodens 46 und des Deckels 50 zusammen, so daß sie einzeln so in jede Richtung festgelegt sind, wobei ihre Innenkontur sehr nahe an der Außenkontur der Ventilkugel 32 herankommt, ohne diese jedoch zu berühren. Bei der Montage werden Ventilkugel 32 und die Segmente 76 bis 80 vormontiert und können anschließend als Einheit in das Gehäuse 30 eingefügt werden. Der Zusammenbau ist gut in Fig. 9 zu erkennen.

Wie in Fig. 9 und 10 gezeigt, weist das Segment 76 eine Ringnut 86 konzentrisch zur Öffnung in dem Gehäuse auf, die ein ringförmiges Dichtungselement 88, z.B. aus PTFE, aufnimmt, das an der Außenseite der Ventilkugel 32 dichtend anliegt. Die zugekehrte Seite des ringförmigen Dichtelements 88 ist daher entsprechend konturiert. In der Nut 86 sitzt ein Dichtungsring 90 aus einem elastomeren Material, der das Dichtungselement 88 gegen die Ventilkugel 32 vorspannt. Dadurch ist eine Abdichtung bezüglich des Abgangs B geschaffen, wodurch verhindert wird, daß zum Kühler 18 strömendes heißes Wasser seitlich entweicht. Bezüglich der anderen Abgänge D und C (Flansche 42, 44 in den Fign. 3 und 4) ist eine besondere Dichtung nicht erforderlich. Ein Lecken an den übrigen Stellen, das nicht ganz zu vermeiden ist, da die Segmente 76 bis 80 die Ventilkugel 32 nicht berühren, ist gegebenenfalls sogar erwünscht.

Wie in Fig. 9 zu erkennen, erstreckt sich die Welle 54 mit einem kurzen Abschnitt aus dem Gehäuse 30 heraus. An dieser Stelle kann sie werden mit der Ausgangswelle eines Getriebes gekoppelt, das seinerseits mit einem Drehantrieb, z.B. einem Elektromotor, in Verbindung steht. Der Welle 54 oder der Ventilkugel 32 kann ein Positionssensor zugeordnet werden, um die jeweilige Drehstellung zu erfassen. Außerdem wird vorzugsweise eine Rückstellfeder (nicht gezeigt) vorgesehen, um die Ventilkugel in eine Ausgangsstellung gegen einen Anschlag (nicht gezeigt) vorzuspannen, wobei diese Grundstellung in Fig. 2e dargestellt ist, in der die Ventilkugel eine Verbindung des Zulaufs A mit dem Abgang B herstellt.

## Patentansprüche

1. Kühlsystem für eine Verbrennungskraftmaschine, insbesondere für Automobile, mit einer Pumpe (10) für flüssiges Kühlmittel, die mit Kühlkanälen des Blocks bzw. des Zylinderkopfes (14) der Verbrennungskraftmaschine verbunden ist, einer mit den Kühlkanälen verbundenen Ventilanordnung, von der eine Leitung über einen Kühler (18) und eine weitere Leitung über einen Bypass (22) zur Ansaugseite der Pumpe (10) zurückgeführt ist, einer Betätigungsvorrichtung zur Betätigung der Ventilanordnung nach Maßgabe von Steuersignalen einer Steuervorrichtung für das Kühlsystem, wobei die Ventilanordnung ein einziges Mehrwegeventil (16) aufweist mit einem Zulauf (A) und drei mit dem Kühler (18), einer Heizung (20) und dem Bypass (22) verbundenen Abgängen (B, C und D) und dass die Betätigungsvorrichtung für das verstellbare Ventilglied vorgesehen ist, das zusammen mit der Anordnung der Abgänge (B, C und D) so ausgebildet ist, daß es in einer ersten Stellung den Durchfluß sperrt, in einer zweiten Stellung einen Durchfluß zum Bypass (22), in einer dritten Stellung Teildurchflüsse zum Bypass (22) und zum Kühler (18), in einer vierten Stellung den Durchfluß zum Kühler (18) und in einer fünften Stellung den Teildurchgang zum Kühler (18) und zum dritten Abgang (C) freigibt, und wobei das Mehrwegeventil ein Kugelventil (16) ist, der Zulauf (A) axial in das Innere einer hohlen Ventilkugel (32) gebildet ist, die drehbar in einem Ventilgehäuse (30) gelagerte Ventilkugel in Umfangsrichtung einen länglichen Durchgang (36) aufweist und die radialen Abgänge (B, C und D) im Ventilgehäuse (30) annähernd in Höhe des Äquators der Ventilkugel (32) liegen.

2. Kühlsystem nach Anspruch 1, **dadurch gekennzeichnet, daß** der mit dem Kühler (18) verbundene Abgang (B) einen Dichtring (88) aus gleitfähigem verschleißfähigen Material abstützt, der an der Ventilkugel (32) anliegt und der Dichtring (88) von einem Federelement vorgespannt ist.

3. Kühlsystem nach Anspruch 2, **dadurch gekennzeichnet, daß** das Federelement von einem Dichtelement (90) aus elastomerem Material gebildet ist, welches in einer Nut (86) aufgenommen ist und den Durchgang von Kühlmittel über die Nut (86) sperrt.

4. Kühlsystem nach einem der Ansprüche 1 bis 3, **dadurch gekennzeichnet, daß** zwischen der Innenwandung des Ventilgehäuse (30) und der Ventilkugel (32) zwei oder drei Segmente (76, 78, 80) angeordnet sind, die an der Innenseite nahe der Oberfläche der Ventilkugel (32) liegen und derem Verlauf folgen und außen an der Innenwand des Ventilgehäuses (32) anliegen und Mittel dem Ventilgehäuse (30) zugeordnet sind, um die Segemente (76, 78, 80) im Ventilgehäuse festzulegen.

5. Kühlsystem nach einem der Ansprüche 1 bis 4, **dadurch gekennzeichnet, daß** das Ventilgehäuse (30) topfförmig ist, wobei die Abgänge in der Wandung vorgesehen sind und die offene Seite von einem Deckel (50) verschließbar ist und der Boden (46) und der Deckel (50) Lager aufweisen für eine Welle (54), auf der die Ventilkugel (32) drehfest angeordnet ist.

6. Kühlsystem nach Anspruch 4 und 5, **dadurch gekennzeichnet, daß** die Segmente (76, 78, 80) von Abschnitten des Bodens (46) und des Deckels (50) allseits festgelegt sind.

7. Kühlsystem nach einem der Ansprüche 1 bis 6, **dadurch gekennzeichnet, daß** die Ventilkugel (32) in Richtung ihrer Drehachse an beiden diametral gegenüberliegenden Enden einen ringförmigen axialen Ansatz (58, 60) aufweist, in jedem ringförmigen Ansatz (58, 60) innen ein Lagerring (64, 68) mittels radialer Rippen (62) gelagert ist und die Lagerringe (64, 68) eine Welle (54) drehfest aufnehmen, die mit einem Ende aus dem Ventilgehäuse (30) herausragt.

8. Kühlsystem nach einem der Ansprüche 1 bis 7, **dadurch gekennzeichnet, daß** die Ventilkugel (32) von einem Gleichstrommotor über ein Getriebe antreibbar ist.

9. Kühlsystem nach einem der Ansprüche 1 bis 7, **dadurch gekennzeichnet, daß** ein berührungsloser Winkelsensor als Positionssensor für die Ventilkugel (32) vorgesehen ist.

10. Kühlsystem nach einem der Ansprüche 1 bis 7, **dadurch gekennzeichnet, daß** auf die Ventilkugel (32) eine Rückstellfeder wirkt, welche die Ventilkugel (32) in eine Grundstellung vorspannt.

11. Kühlsystem nach einem der Ansprüche 1 bis 7 oder 9 oder 10, **dadurch gekennzeichnet, daß** ein Dehnstoffelement axial in der Ventilkugel (32) angeordnet ist und Getriebemittel vorgesehen sind zur Umsetzung der linearen Bewegung des Dehnstoffelements in eine Drehbewegung der Ventilkugel (32).

12. Kühlsystem nach Anspruch 11, **dadurch gekennzeichnet, daß** eine Druckfeder als Rückstellfeder vorgesehen ist, um die Ventilkugel (32) in eine Grundstellung vorzuspannen.

## Claims

1. Cooling system for an internal combustion engine, especially for motor vehicles, having a pump (10) for liquid coolant, which pump (10) is connected to cooling ducts of the block or of the cylinder head (14) of the internal combustion engine, a valve arrangement which is connected to the cooling ducts and from which one line is fed back via a radiator (18), and a further line is fed back via a bypass (22), to the intake side of the pump (10), an activation device for activating the valve arrangement in accordance with control signals of a control device for the cooling system, wherein the valve arrangement has a single multi-path valve (16), with an inflow (A) and three outlets (B, C and D) which are connected to the radiator (18), to a heater (20) and to the bypass (22), and in that the activation device is provided for the adjustable valve element which is embodied together with the arrangement of the outlets (B, C and D) in such a way that in a first position it blocks off the throughflow, in a second position it enables the throughflow to the bypass (22), in a third position it enables partial throughflows to the bypass (22) and to the radiator (18), in a fourth position it enables the throughflow to the radiator (18) and in a fifth position it opens the partial passage to the radiator (18) and to the third outlet (C), and wherein the multi-path valve is a ball valve (16), the inflow (A) is formed axially into the interior of a hollow valve ball (32), the valve ball which is mounted rotatably in a valve housing (30) has an elongate passage (36) in the circumferential direction, and the radial outlets (B, C and D) in the valve housing (30) are located approximately at the level of the equator of the valve ball (32).

2. Cooling system according to Claim 1, **characterized in that** the outlet (B) which is connected to the radiator (18) supports a sealing ring (88) made of slidable, wear-capable material which bears against the valve ball (32), and the sealing ring (88) is prestressed by a spring element.

3. Cooling system according to Claim 2, **characterized in that** the spring element is formed by a sealing element (90) made of an elastomer material which is held in a groove (86) and blocks the passage of coolant via the groove (86).

4. Cooling system according to one of Claims 1 to 3, **characterized in that** two or three segments (76, 78, 80) are arranged between the inner wall of the valve housing (30) and the valve ball (32), which segments (76, 78, 80) bear on the inner side near to the surface of the valve ball (32), follow the profile thereof and bear against the outside of the inner wall of the valve housing (32), and means are assigned to the valve housing (30) in order to secure the segments (76, 78, 80) in the valve housing.

5. Cooling system according to one of Claims 1 to 4, **characterized in** the valve housing (30) is pot-shaped, wherein the outlets are provided in the wall, and the open side can be closed off by a cover (50), and the floor (46) and the cover (50) have bearings for a shaft (54) on which the valve ball (32) is arranged in a rotationally fixed fashion.

6. Cooling system according to Claims 4 and 5, **characterized in that** the segments (76, 78, 80) are secured on all sides by sections of the floor (46) and of the cover (50).

7. Cooling system according to one of Claims 1 to 6, **characterized in that** the valve ball (32) has, in the direction of its rotational axis, an annular axial shoulder (58, 60) on the two diametrically opposite ends, a bearing ring (64, 68) is mounted in each annular shoulder (58, 60) by means of radial fins (62), and the bearing rings (64, 68) accommodate, in a rotationally fixed fashion, a shaft (54) which projects with one end out of the valve housing (30).

8. Cooling system according to one of Claims 1 to 7, **characterized in that** the valve ball (32) can be driven by a direct current motor via a transmission.

9. Cooling system according to one of Claims 1 to 7, **characterized in that** a contactless angle sensor is provided as a position sensor for the valve ball (32).

10. Cooling system according to one of Claims 1 to 7, **characterized in that** a restoring spring, which prestresses the valve ball (32) into a basic position, acts on the valve ball (32).

11. Cooling system according to one of Claims 1 to 7 or 9 or 10, **characterized in that** an expandable material element is arranged axially in the valve ball (32), and transmission means are provided for converting the linear movement of the expandable material element into a rotational movement of the valve ball (32).

12. Cooling system according to Claim 11, **characterized in that** a compression spring is provided as a restoring spring in order to prestress the valve ball (32) into a basic position.

## Revendications

1. Système de refroidissement pour un moteur à combustion interne, en particulier pour des automobiles, avec une pompe (10) pour un agent de refroidissement liquide, qui est raccordée à des canaux de refroidissement du bloc ou de la culasse (14) du moteur à combustion interne, avec un agencement de soupapes raccordé aux canaux de refroidissement, à partir duquel une conduite est renvoyée via un refroidisseur (18) et une autre conduite est renvoyée via une dérivation (22) vers le côté d'aspiration de la pompe (10), avec un dispositif d'actionnement pour actionner l'agencement de soupapes en réponse à des signaux de commande d'un dispositif de commande pour le système de refroidissement, dans lequel l'agencement de soupapes présente une unique soupape à plusieurs voies (16) avec une arrivée (A) et trois sorties (B, C et D) raccordées au refroidisseur (18), à un chauffage (20) et à la dérivation (22), et dans lequel le dispositif d'actionnement est prévu pour l'organe de soupape réglable, qui est réalisé avec l'agencement des sorties (B, C et D), de telle manière que dans une première position il bloque l'écoulement, et qu'il libère dans une deuxième position un écoulement vers la dérivation (22), dans une troisième position des écoulements partiels vers la dérivation (22) et vers le refroidisseur (18), dans une quatrième position l'écoulement vers le refroidisseur (18) et dans une cinquième position le passage partiel vers le refroidisseur (18) et vers la troisième sortie (C), et dans lequel la soupape à plusieurs voies est une soupape à bille (16), l'arrivée (A) est formée axialement dans le volume intérieur d'une bille de soupape creuse (32), la bille de soupape montée de façon rotative dans un boîtier de soupape (30) présente un passage allongé (36) en direction périphérique et les sorties radiales (B, C et D) sont situées dans le boîtier de soupape (30) approximativement à hauteur de l'équateur de la bille de soupape (32).

2. Système de refroidissement selon la revendication 1, **caractérisé en ce que** la sortie (B) raccordée au refroidisseur (18) porte un joint torique (88) en matériau d'usure glissant, qui est appliqué sur la bille de soupape (32) et le joint torique (88) peut être précontraint par un élément de ressort.

3. Système de refroidissement selon la revendication 2, **caractérisé en ce que** l'élément de ressort est formé par un élément d'étanchéité (90) en matériau élastomère, qui est logé dans une rainure (86) et qui bloque le passage d'agent de refroidissement par la rainure (86).

4. Système de refroidissement selon l'une quelconque des revendications 1 à 3, **caractérisé en ce qu'**il se trouve, entre la paroi intérieure du boîtier de soupape (30) et la bille de soupape (32), deux ou trois segments (76, 78, 80) qui sont appliqués sur la face intérieure à proximité de la surface de la bille de soupape (32) et qui suivent son tracé, et qui sont appliqués extérieurement sur la paroi intérieure du boîtier de soupape (30) et des moyens sont associés au boîtier de soupape (30), afin de fixer les segments (76, 78, 80) dans le boîtier de soupape.

5. Système de refroidissement selon l'une quelconque des revendications 1 à 4, **caractérisé en ce que** le boîtier de soupape (30) est en forme de pot, dans lequel les sorties sont prévues dans la paroi et le côté ouvert peut être fermé par un couvercle (50), et le fond (46) et le couvercle (50) présentent des paliers pour un arbre (54), sur lequel la bille de soupape (32) est calée en rotation.

6. Système de refroidissement selon la revendication 4 ou 5, **caractérisé en ce que** les segments (76, 78, 80) sont calés de tous les côtés par des parties du fond (46) et du couvercle (50).

7. Système de refroidissement selon l'une quelconque des revendications 1 à 6, **caractérisé en ce que** la bille de soupape (32) présente une saillie axiale annulaire (58, 60) aux deux extrémités diamétralement opposées dans la direction de son axe de rotation, une bague de palier (64, 68) est logée à l'intérieur de chaque saillie annulaire (58, 60) au moyen de nervures radiales (62) et les bagues de palier (64, 68) contiennent un arbre (54) calé en rotation, dont une extrémité sort du boîtier de soupape (30).

8. Système de refroidissement selon l'une quelconque des revendications 1 à 7, **caractérisé en ce que** la bille de soupape (32) peut être entraînée par un moteur à courant continu au moyen d'un engrenage.

9. Système de refroidissement selon l'une quelconque des revendications 1 à 7, **caractérisé en ce qu'**il est prévu un détecteur d'angle sans contact comme détecteur de position pour la bille de soupape (32).

10. Système de refroidissement selon l'une quelconque des revendications 1 à 7, **caractérisé en ce qu'**un ressort de rappel agit sur la bille de soupape (32), et précontraint la bille de soupape (32) dans une position de base.

11. Système de refroidissement selon l'une quelconque des revendications 1 à 7 ou 9 ou 10, **caractérisé en ce qu'**un élément en matière extensible est disposé axialement dans la bille de soupape (32) et il est prévu des moyens d'engrenage pour la conversion du mouvement linéaire de l'élément en matière extensible en un mouvement de rotation de la bille de soupape (32).

12. Système de refroidissement selon la revendication 11, **caractérisé en ce qu'**il est prévu un ressort de pression comme ressort de rappel, afin de précontraindre la bille de soupape (32) dans une position de base.
